# EUROPÄISCHE PATENTSCHRIFT

(11) **EP 0 694 979 B1**
(45) Veröffentlichungstag und Bekanntmachung des Hinweises auf die Patenterteilung: **08.07.1998**
(21) Anmeldenummer: 95106529.1
(22) Anmeldetag: 29.04.1995
(51) Int. Cl.: H01M 2/02, H01M 10/16

(54) **Akkumulator mit Seitenwandrippen**
Storage battery with ribs on the side walls
Accumulateur avec des nervures sur les côtés latéraux

(30) Priorität: 28.07.1994 DE 4426770
(43) Veröffentlichungstag der Anmeldung: 31.01.1996
(73) Patentinhaber: VB Autobatterie GmbH, D-30419 Hannover (DE)
(72) Erfinder: Gummelt, Klaus, D-30823 Garbsen (DE); Böhle, Christian, Dr., D-30823 Garbsen (DE)
(74) Vertreter: Kaiser, Dieter Ralf, Dipl.-Ing.

(56) Entgegenhaltungen:
- EP-A- 0 169 179
- US-A- 1 526 208

## Beschreibung

Die Erfindung betrifft einen Akkumulator, insbesondere Bleiakkumulator, mit einem Blockkasten aus Kunststoff, an dessen Stimwänden und Trennwänden Rippen angeformt sind, welche in die Kastenabteile hineinragen und zumindest teilweise am Plattensatz anliegen.

Die Blockkästen von Bleiakkumulatoren wurden früher aufgrund der gefragten Typenvielfalt in mehreren Größenklassen hergestellt. Ebenso vielfältig waren die entsprechend den Gehäusegrößen angebotenen Batteriekapazitäten. Die Notwendigkeit, für jede Batteriegröße eine eigene Gehäusespritzform verwenden zu müssen, führte jedoch allein aus Kostengründen dahin, daß heute von den Batterieherstellern nur noch wenige Größenreihen mit standardisierten Außenabmessungen, aber unterschiedlichen Energieinhalten angeboten werden. Dies wird dadurch erreicht, daß die Anzahl der positiven und negativen Platten innerhalb jedes Kastenabteils verändert und der durch Ausbau von Platten frei gewordene Zellenraum durch Versatzstücke, sogenannte Beisteckscheider, ausgefüllt wird.

Eine andere Maßnahme, um den Innenraum eines Batteriekastens auf das für den Plattenblock benötigte Volumen zu reduzieren, besteht nach EP-OS 169179 darin, die Zwischen- und Stimwände mit vertikalen Rippen zu versehen. Diese dienen als Abstandshalter, bewirken zugleich eine Versteifung der Zwischenwände und sorgen für eine bessere Elektrolytumspülung der äußeren Elektrodenplatten.

Außerdem ist es bekannt, z.B. aus der DE-OS 3117917 oder DE-OS 3128224, die an den Stirn- und Trennwänden des Kastens angeordneten Versteifungsrippen durch elastische Federrippen zu ersetzen. Diese Rippen sind an den Kasten direkt angeformt und verlaufen in einem von 90° abweichenden Winkel zu der entsprechenden Wand. Sie erlauben eine automatische Montage und schmiegen sich den eingesetzten Plattensätzen an. Als nachteilig bei den Federrippen hat sich jedoch herausgestellt, daß sie unter Rüttelbeanspruchungen der Akkumulatorenbatterie Beschädigungen an den äußeren Elektrodenplatten hervorrufen können. Als Abhilfe ist die Anwendung von Beilagen möglich, welche gegen die Rippen gepackt werden, so daß die äußeren Platten des Plattensatzes abgedeckt sind. Die Beilagen belasten indessen als zusätzliche Einbauteile den Montagevorgang. Sie machen auch seine Automatisierung aufwendiger.

Der Erfindung liegt die Aufgabe zugrunde, einen Bleiakkumulator mit einem Blockkasten und mit Rippen an den Innenwänden des Blockkastens verfügbar zu machen, der sowohl eine automatische Beschickung der Kastenabteile mit den Plattensätzen erlaubt als auch eine feste Positionierung derselben gewährleistet, bei welchem die äußeren, in engem Kontakt mit den Rippen stehenden Platten des Plattenblockes keine Beschädigungen erleiden, wenn der Akkumulator Rüttelbeanspruchungen ausgesetzt ist.

Die Aufgabe wird erfindungsgemäß durch einen Akkumulator gelöst, wie er in Anspruch 1 definiert ist.

Bei einem erfindungsgemäßen Akkumulator bestehen die Rippen aus einem an die Kastenwand angeformten ersten Steg, welcher an seinem in den Kasten ragenden Ende beidseitig mit Fortsetzungsstegen versehen ist, so daß sich ein etwa T-förmiger Querschnitt ergibt, wobei die Rippen über den vollen Querschnitt am Kastenboden angebunden sind.

Die Rippen werden beim Spritzgießen des Kastens mitgeformt und sind aufgrund ihrer "Verwurzelung" mit dem Kastenboden zumindest am unteren Ende weitgehend starr; im oberen Bereich hingegen, wo sich die Verbindung mit dem Kasten auf die Anspritzung der den Fußschenkel des T bildenden Steges beschränkt, werden sie mit der Höhe zunehmend flexibler. Die Einführung der Plattensätze in die Kastenabteile gestaltet sich dadurch besonders reibungslos. Sie wird weiterhin dadurch erleichtert, daß die Stege zum oberen Ende hin eine stufenweise Verjüngung des Gesamtprofils aufweisen, indem zunächst die Fortsetzungsstege durch Abrundungen enden und schließlich auch der erste Steg durch eine Abrundung in die Kastenwand zurücktritt.

Erfindungsgemäß sind die Fortsetzungsstege einer jeden Rippe im wesentlichen parallel zur Kastenwand ausgerichtet.

Dadurch ist in sehr vorteilhafter Weise für die Außenplatten eines Plattenblockes eine Anlage geschaffen, die den Elektrodenplatten eine großflächige Abstützung bietet. Während sich bislang bekannte Stützrippen mit schmalen Anlageflächen oder exponierten Kanten bei Rüttelbeanspruchungen der Batterie in die Elektrodenplatten einarbeiten, was zwangsläufig zu empfindlichen Masseausfällen führt, bleibt der von den neuen Rippen fest gehalterte Plattenblock unter den gleichen Bedingungen unversehrt.

Die Erfindung sieht vor, daß die von den Fortsetzungsstegen gebildete Anlagefläche mindestens 40% der äußeren Plattenfläche des Plattenblockes abdeckt. Besonders günstig ist es jedoch, wenn ca. 60% oder mehr der Plattenfläche abgedeckt sind.

Der mit dem Kasten verbundene Steg jeder Rippe sollte etwa die gleiche Breite wie die Fortsetzungsstege zusammen besitzen. Jedoch sollte die Breite nicht größer sein als die Kastenwanddicke.

Anhand einiger Figuren werden im folgenden einige bevorzugte Ausführungsformen der Erfindung näher beschrieben.
- Figur 1: zeigt einen Teil eines Blockkastens mit erfindungsgemäßen Seitenwandrippen mit T-förmigem Querschnitt.
- Figur 2: zeigt eine erfindungsgemäße Seitenwandrippe mit dem Querschnitt eines modifizierten T.
- Figur 3: zeigt eine erfindungsgemäße Seitenwandrippe mit einer weiteren Modifizierung des T-förmigem Querschnitts.

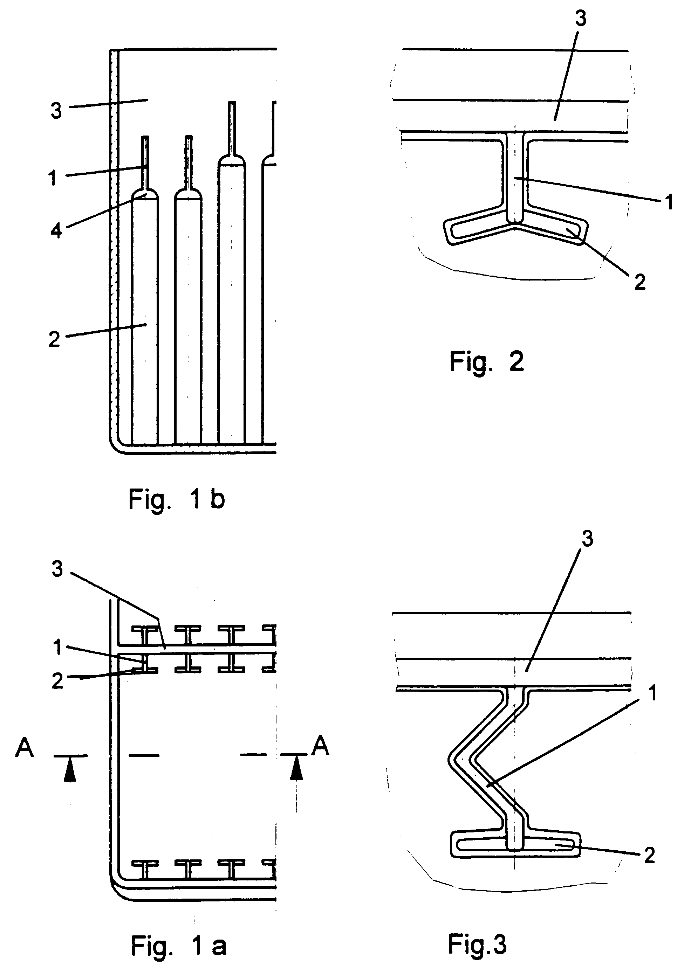

In einer besonders vorteilhaften Ausführung der Seitenwandrippe ist ihre Querschnittsform exakt T-förmig. Ein mit derartigen Rippen versehenes Kastenteil ist in Figur 1a in einer Draufsicht von oben und in Figur 1b in einer Seitenansicht (mit Blick gegen die Kastentrennwand) wiedergegeben. Der hier lotrecht aus der Kastenwand 3 herausstehende Steg 1 verzweigt sich an seinem dem Inneren des Kastens zugewandten Ende in die Fortsetzungsstege 2, welche gemeinsam den zweiten Schenkel des T bilden und aufgrund ihrer parallelen Ausrichtung zur Kastenwand eine breite Anlagefläche bieten.

Die Seitenansicht der Figur 1b läßt die erwähnten Abrundungen 4 der Fortsetzungsstege 2 am oberen Ende der Rippen erkennen. Mit einer ähnlichen Abrundung (nicht sichtbar) treten auch die Stege 1 an ihren oberen Enden in die Kastenwand 3 zurück.

Eine andere vorteilhafte Formgebung für eine Seitenwandrippe gemäß der Erfindung kommt durch eine Abwinkelung der Fortsetzungsstege 2 zustande, so daß sich der aus Figur 2 ersichtliche Querschnitt eines Y ergibt. Die Plattensatzpressung wird in diesem Fall durch die federelastische Abspreizung der leicht gewinkelten Y-Schenkel zur T-Form hin erzielt. Der Winkel zwischen den Schenkeln des Y sollte 150° nicht unterschreiten.

Gemäß Figur 3 kann einer Seitenwandrippe gemäß der Erfindung eine gewisse Elastizität auch durch eine Winkelung des an die Kastenwand angeformten Steges 1 verliehen werden.

Unabhängig von den verschiedenen möglichen Ausgestaltungen der Seitenwandrippen, welche im Rahmen der Erfindung liegen, sollte die Forderung, daß die Anlagefläche mindestens 40% der Plattenfläche beträgt, jedoch stets erfüllt sein. Diese Bedingung läßt sich über die Länge der Fortsetzungsstege, die gegenseitigen Abstände und Höhe der Seitenwandrippen einhalten.

Vorteilhaft sind möglichst lange Fortsetzungsstege 2, deren Dicke jedoch mit einer im wesentlichen mit der Dicke der von der Wand ausgehenden Stege 1 übereinstimmt. Die Dicke der Stege 1 wird von den spritztechnischen Möglichkeiten begrenzt und hängt im Einzelfall von der Kastenhöhe ab. Hohe Kästen werden im allgemeinen wegen eines glatten Materialflusses und guter Entformbarkeit dickere Stege erfordern als niedrige Kästen. Dabei ist zu berücksichtigen, daß die Wandstärken der aus elastischen Kunststoffen gefertigten Akkumulatorenkästen selbst nicht mehr als 2 bis 5 mm, insbesondere ca. 2,5 mm, betragen.

Möglichst dicke Stege bis zu einer Stärke von ca, 5 mm sind dann vorzusehen, wenn sich die Rippen bis zur Höhe des Deckels erstrecken sollen, wobei sie zusätzlich der Abstützung des Deckels und der Aufnahme von Kräften bei Überkopfverspannung der Batterie dienen können. Die Rippen (1, 2) erstrecken sich im Mittelbereich der Wand 3 weiter zum oberen Rand als im seitlichen Bereich (Figur 1b).

Die erfindungsgemäßen Seitenwandrippen machen den Akkumulatorenbehälter hinsichtlich der Elektrodenbeschickung nicht nur robotergerecht, sie erlauben vor allem dem Batteriehersteller, Akkumulatoren unterschiedlichen Energiegehalts aufgrund einer Bestückung mit entsprechend reduzierten oder verstärkten Plattenblöcken in Blockkästen mit gleichen Außenabmessungen anzubieten, weil allein die Rippen die Einbauweite bestimmen und sowohl dickeren wie dünneren Plattenblöcken problemlos angepaßt werden können. Sie fungieren als Abstandshalter und halten dabei die Elektrodenplatten auf besonders schonende Weise fest, so daß diese selbst unter Rüttelbeanspruchung keinen Schaden nehmen. Dank einer teils materialbedingten, teils strukturbedingten Restelastizität sind die Rippen ferner in der Lage, neben ihrem Festhaltevermögen auch Dickentoleranzen, die sich zwischen Plattensätzen aus dem gleichen Fertigungslos einstellen können, aufzufangen.

## Patentansprüche

1. Akkumulator, insbesondere Bleiakkumulator, mit einem Blockkasten aus Kunststoff, an dessen Stirnwände und Trennwände Rippen angeformt sind, welche in die Kastenabteile hineinragen und zumindest teilweise am Plattensatz anliegen, dadurch gekennzeichnet, daß die Rippen aus einem an die Kastenwand (3) angeformten Steg (1) bestehen, welcher an seinem in den Kasten ragenden Ende beidseitig mit Fortsetzungsstegen (2) versehen ist, so daß sich ein etwa T-förmiger Querschnitt ergibt, und daß die Rippen über ihren vollen Querschnitt am Kastenboden angebunden sind.

2. Akkumulator nach Anspruch 1, dadurch gekennzeichnet, daß die Fortsetzungsstege im wesentlichen parallel zur Kastenwand ausgerichtet sind.

3. Akkumulator nach Anspruch 2, dadurch gekennzeichnet, daß das Querschnittsprofil der Rippen durch Abwinkeln der Fortsetzungsstege Y-förmig ist.

4. Akkumulator nach Anspruch 2, dadurch gekennzeichnet, daß der an die Kastenwand angeformte Steg abgewinkelt ist.

5. Akkumulator nach einem der Ansprüche 1 bis 4, dadurch gekennzeichnet, daß der an die Kastenwand angeformte Steg (1) und die Fortsetzungsstege (2) etwa gleiche Länge besitzen.

6. Akkumulator nach einem der Ansprüche 1 bis 5, dadurch gekennzeichnet, daß die Dicke des an die Kastenwand angeformten Stegs nicht größer als die Kastenwanddicke ist.

7. Akkumulator nach einem der Ansprüche 1 bis 6, dadurch gekennzeichnet, daß die Fortsetzungsstege der Rippen eine Anlagefläche bilden, die mindestens 40% der äußeren Plattenflächen des Elektrodensatzes abdeckt.

8. Akkumulator nach Anspruch 6, dadurch gekennzeichnet, daß ca. 60% der äußeren Plattenflächen des Elektrodensatzes von den Fortsetzungsstegen abgedeckt sind.

## Claims

1. Storage battery, in particular a lead storage battery having a plastic monobloc container onto whose end walls and partitions ribs are formed which project into the container compartments and are at least partially in contact with the plate group, characterized in that the ribs comprise a web (1) which is formed onto the container wall (3) and which is provided with continuation webs (2) on both sides at its end projecting into the container so that an approximately T-shaped cross section results and in that the ribs are joined to the container base over their entire cross section.

2. Storage battery according to Claim 1, characterized in that the continuation webs are aligned essentially parallel to the container wall.

3. Storage battery according to Claim 2, characterized in that the cross-sectional profile of the ribs is Y-shaped as a result of angling of the continuation webs.

4. Storage battery according to Claim 2, characterized in that the web formed onto the container wall is bent.

5. Storage battery according to one of Claims 1 to 4, characterized in that the web (1) formed onto the container wall and the continuation webs (2) have approximately the same length.

6. Storage battery according to one of Claims 1 to 5, characterized in that the thickness of the web formed onto the container wall is not greater than the container wall thickness.

7. Storage battery according to one of Claims 1 to 6, characterized in that the continuation webs of the ribs form a contact surface area which covers at least 40% of the outer plate area of the electrode group.

8. Storage battery according to Claim 6, characterized in that approximately 60% of the outer plate area of the electrode group is covered by the continuation webs.

## Revendications

1. Accumulateur, en particulier accumulateur au plomb, avec un bac monobloc en matière plastique, sur lequel les parois frontales et les cloisons de séparation sont formées des nervures, qui font saillie dans les compartiments du bac et s'appliquent au moins en partie au jeu des plaques,
caractérisé en ce que
les nervures consistent en un tenon (1), formé sur la paroi du bac (3), tenon qui est pourvu à son extrémité, qui fait saillie dans le bac, des deux côtés de tenons de prolongement (2), d'une manière telle que l'on obtienne une section transversale ayant à peu près la forme d'un T, et que les nervures soient reliées sur leur section transversale complète au fond du bac.

2. Accumulateur selon la revendication 1,
caractérisé en ce que
les tenons de prolongation sont orientés de façon sensiblement parallèle à la paroi du bac.

3. Accumulateur selon la revendication 2,
caractérisé en ce que
le profil des nervures, en section transversale, a la forme d'un Y, en pliant en angle les nervures de prolongation.

4. Accumulateur selon la revendication 1,
caractérisé en ce que
le tenon, formé sur la paroi du bac, est plié de façon à former un angle.

5. Accumulateur selon l'une des revendications 1 à 4,
caractérisé en ce que
le tenon (1), formé sur la paroi du bac, et les tenons de prolongation (2) ont à peu près la même longueur.

6. Accumulateur selon l'une des revendications 1 à 5,
caractérisé en ce que
l'épaisseur du tenon formé sur la paroi du bac n'est pas plus grande que l'épaisseur de la paroi du bac.

7. Accumulateur selon l'une des revendications 1 à 6,
caractérisé en ce que
les tenons de prolongation des nervures forment une surface d'appui, qui recouvrent au moins 40 % des surfaces extérieures des plaques du jeu des électrodes.

8. Accumulateur selon la revendication 6,
caractérisé en ce que
60 % environ des surfaces extérieures des plaques du jeu d'électrodes est recouvert par les tenons de prolongation.
